# EUROPEAN PATENT APPLICATION

(11) **EP 4 582 988 A1**
(43) Date of publication of application: **09.07.2025**
(21) Application number: 23860496.1
(22) Date of filing: 31.08.2023
(51) Int. Cl.: G06F 21/64, G06F 21/33, H04L 67/131

(54) **AVATAR MANAGEMENT SYSTEM, AVATAR MANAGEMENT METHOD, AND PROGRAM**

(30) Priority: 31.08.2022 JP 2022137904; 29.11.2022 JP 2022190241
(71) Applicant: Toppan Holdings Inc., Tokyo 110-0016 (JP)
(72) Inventor: KOIKE Yuko, Tokyo 110-0016 (JP); KANEYAMA Chihiro, Tokyo 110-0016 (JP)
(74) Representative: Hoffmann Eitle
(86) International application number: PCT/JP2023/031859
(87) International publication number: WO 2024/048734

(57) **Abstract**

An avatar management system performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

## Description

### [Technical Field]

The present invention relates to an avatar management system, an avatar management method, and a program.

The present application is based on and claims the benefit of priority from Japanese Patent Application No. 2022-137904, filed on August 31, 2022, and Japanese Patent Application No. 2022-190241, filed on November 29, 2022, the descriptions of which are incorporated herein by reference.

### [Background Art]

Technology is known in which an avatar in a virtual space is made capable of performing actions such as purchasing virtual objects in response to user operations (see, for example, PTL 1).

### [Citation List]

### [Patent Literature]

[PTL 1] JP 2022-117111 A

### [Summary of Invention]

### [Technical Problem]

It is desirable to promote the use of the avatars that exist in the virtual space.

The purpose of the present invention is to enable the activation of the use of avatars in the virtual space.

### [Solution to Problem]

To solve the above-described problems, an avatar management system according to one aspect of the present invention includes an avatar identification information management unit that performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

An avatar management method in an avatar management system according to one aspect of the present invention includes a step in which an avatar identification information management unit performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

A program according to one aspect of the present invention causes a computer in an avatar management system to function as an avatar identification information management unit that performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

### [Advantageous Effects of Invention]

According to the present invention, the use of the avatars in the virtual space can be promoted.

### [Brief Description of Drawings]

[Fig. 1] Fig. 1 is a diagram illustrating an example of an overall configuration of an identity management system according to the present embodiment;
[Fig. 2] Fig. 2 is a diagram illustrating an example of a configuration of an avatar generation system according to the present embodiment;
[Fig. 3] Fig. 3 isa schematic diagram illustrating a flow of avatar generation according to the present embodiment;
[Fig. 4] Fig. 4 isa diagram illustrating an example of a hardware configuration of the identity management device according to the present embodiment;
[Fig. 5] Fig. 5 is a diagram illustrating an example of a functional configuration of the identity management device according to the present embodiment;
[Fig. 6] Fig. 6 is a diagram illustrating an example of end user information according to the present embodiment;
[Fig. 7] Fig. 7 is a diagram illustrating an example of avatar information according to the present embodiment;
[Fig. 8] Fig. 8 is a diagram illustrating an example of a metafile according to the present embodiment;
[Fig. 9] Fig. 9 is a diagram illustrating an example of information that is associated with an avatar and stored in an avatar VC storage unit according to the present embodiment;
[Fig. 10] Fig. 10 is a diagram illustrating an example of information that is associated with a user and stored in an avatar VC storage unit according to the present embodiment;
[Fig. 11] Fig. 11 is a diagram illustrating an example of a structure of credit information according to the present embodiment;
[Fig. 12] Fig. 12 is a diagram illustrating an example of a structure of issuer information according to the present embodiment;
[Fig. 13] Fig. 13 is a sequence diagram illustrating an example of a processing procedure performed by the identity management system, which is associated with generation and registration of an avatar and registration of avatar authentication information, according to the present embodiment;
[Fig. 14] Fig. 14 is a sequence diagram illustrating an example of a processing procedure performed by the identity management system, which is associated with an authenticity confirmation, according to the present embodiment;
[Fig. 15] Fig. 15 is a sequence diagram illustrating an example of a processing procedure for adding use authorization of an avatar and an example of a processing procedure for an avatar being added use authorization, according to the present embodiment;
[Fig. 16] Fig. 16 is a diagram illustrating an example of management of a wallet held by the avatar;
[Fig. 17] Fig. 17 is a sequence diagram illustrating an example of a processing procedure performed by the identity management system, which is associated with a transaction between avatars, according to the present embodiment.

### [Description of Embodiments]

### <Embodiment>

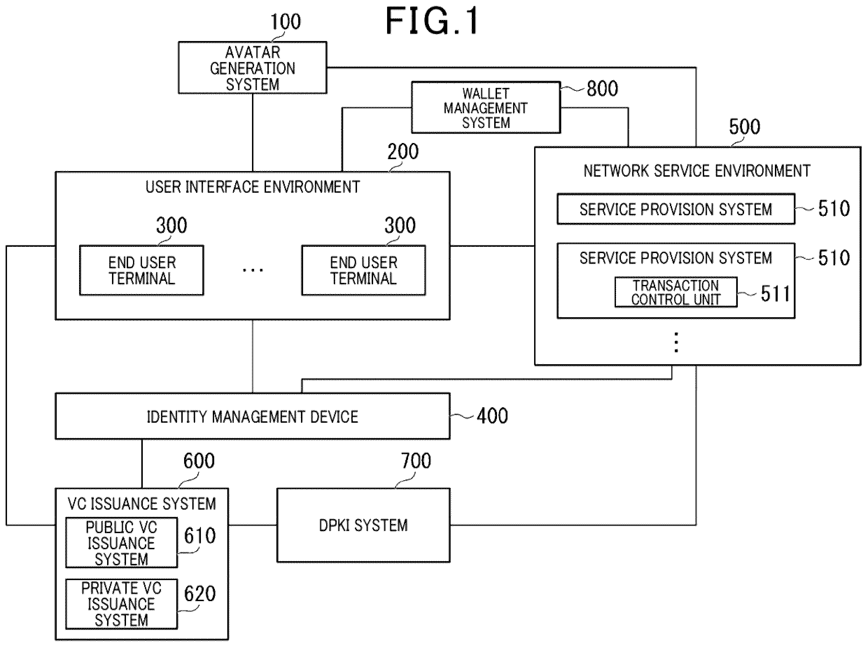

Fig. 1 shows an example of the overall configuration of the identity management system (an example of an avatar management system) according to the present embodiment. The identity management system of the present embodiment has the following components: an avatar generation system 100; a user interface environment 200; an identity management device 400; a network service environment 500; a verifiable credentials (VC) issuance system 600; and a DPKI system 700. These system components are connected via a network.

The avatar generation system 100 is a system that generates avatars for use in the network service environment 500.

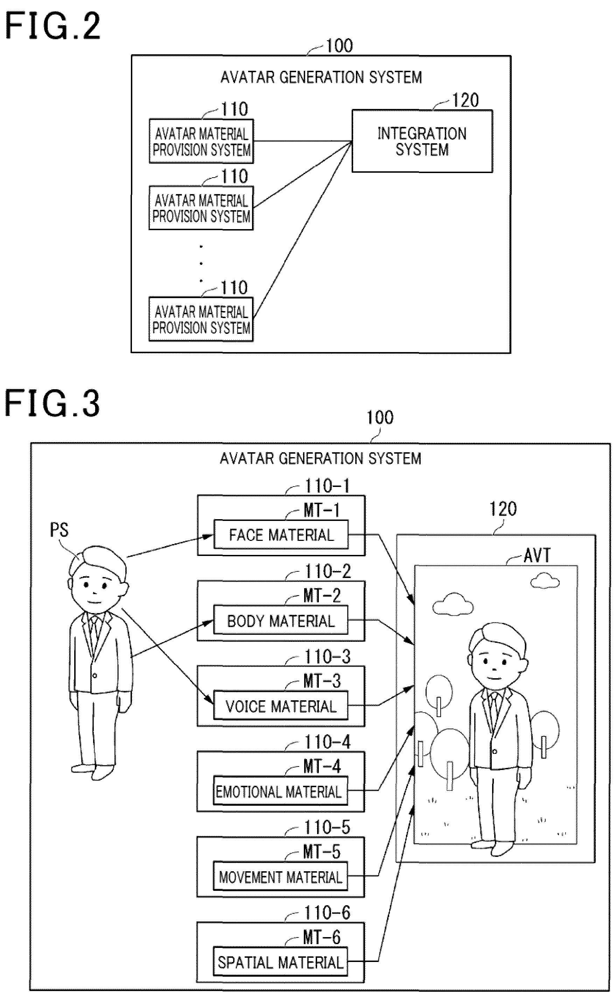

Fig. 2 shows an example of an avatar generation system 100. The avatar generation system 100 shown in the same figure includes a plurality of avatar material provision systems 110 and one integration system 120.

The avatar material provision system 110 is a system that generates predetermined avatar materials among materials (avatar materials) that constitute an avatar and provides the generated avatar materials, respectively. The avatar material provision systems 110 may, for example, each be operated by a predetermined avatar material provider (company).

The integration system 120 acquires necessary avatar materials from among the avatar materials provided by the avatar material provision system 110 and generates avatars by integrating (combining) the acquired avatar materials.

In the avatar generation system 100, the avatar material provision system 110 and the integration system 120 may be connected via a network.

The number of avatar material provision systems 110 in the avatar generation system 100 is not limited and may be one or more. The number of integration systems 120 is also not limited and may be one or more.

Fig. 3 schematically shows the flow of avatar generation in the avatar generation system 100. The avatar in the present embodiment may be, for example, a character in two or three dimensions (3D), or a three-dimensional real avatar as a person or the like. In the explanation of the diagram, the case of generating a three-dimensional real avatar as a person is taken as an example. A real avatar is, for example, an avatar in which the actual person PS is realistically reproduced based on information obtained by imaging the person PS from which the avatar is generated.

In the avatar generation system 100 in the same figure, an example is shown with six avatar material provision systems 110-1 to 110-6.

The avatar material provision system 110-1 generates face (head) material in 3D as avatar material and provides the generated face material MT-1.

The avatar material provision system 110-2 generates body material MT-2 as avatar material and provides the generated body material MT-2. The body material MT-2 here is the part of the human body excluding the head. The avatar material provision system 110-2 may also generate body material MT-2 in a state where clothing is worn

The avatar material provision system 110-3 generates voice material MT-3 as avatar material and provides the generated voice material MT-3. The voice material MT-3 is the voice material uttered by the avatar.

The avatar material provision system 110-4 generates emotional material MT-4 as avatar material and provides the generated emotional material MT-4. The emotional material MT-4 includes, for example, information that changes the facial expression of the face material, the movement of the body material MT-2, etc., according to each predetermined emotion. The emotional material MT-4 enables the avatar to express its emotions.

The avatar material provision system 110-5 generates movement material MT-5 as avatar material and provides the generated movement material MT-5. The movement material MT-5 includes information for providing movement to the avatar. For example, if the avatar is a weather forecaster appearing in a weather forecast web content, the movement material MT-5 generated for the weather forecaster can provide movements corresponding to the weather forecaster, such as pointing to a weather map.

The avatar material provision system 110-6 generates spatial material MT-6 as avatar material and provides the generated spatial material MT-6. The spatial material MT-6 is the material of the space in which the avatar exists.

In the avatar generation system 100 in the same figure, the avatar material provision system 110-1 images the person PS from which the avatar material is generated and generates the face material MT-1 of the person PS. The avatar material provision system 110-2 also images the person PS from which the avatar material is generated to generate the body material MT-2 of the person PS. In addition, the avatar material provision system 110-3 generates the voice material MT-3 of the person PS by using the recorded data of the voice of the person PS from which the material is generated.

The integration system 120 then acquires the avatar material (face material MT-1, body material MT-2, the voice material MT -3, the emotional material MT-4, the movement material MT-5, and the spatial material MT-6). The integration system 120 integrates the acquired avatar materials to generate the avatar AVT.

The avatar AVT does not have to use all of the avatar materials (face material, body material, voice material, emotion material, movement material and space material) shown in the same figure. In other words, the avatar AVT may, for example, generate an avatar using some of the avatar materials shown in the same figure. Which of the avatar materials is used to generate the avatar may be changed according to, for example, the network service in which the generated avatar is used or the environment of a metaverse in which the avatar is to exist.

The description returns to Fig. 1. The user interface environment 200 is an environment that provides a user interface to end users of the network service environment 500. Specifically, the user interface environment 200 has one or more end user terminals 300 corresponding to each of one or more end users.

The end user terminal 300 is a terminal used by end users to receive network services provided by the network service environment 500.

The end user terminal 300 can connect to a service provision system 510 in response to end user operations, and output applications and content according to network services provided by the connected service provision system 510 by display, sound, etc.

The end user terminal 300 may be a personal computer, smartphone, tablet terminal, etc.

The identity management device 400 manages identities. In the present embodiment, identities include avatars that exist in a metaverse. Such avatars may include those that are made to act in response to end user operations, instructions, etc., as well as avatars that can act autonomously without end user operations, etc., by using artificial intelligence (AI), for example, or as independent entities to which no end user corresponds. The avatars (AI avatars) that can act autonomously as an independent entity to which no end user is assigned may also be included, for example by using artificial intelligence (AI). The metaverse is a virtual space (an example of activity space) constructed in a network. The identities in the present embodiment may also include end users who are associated with avatars and act in the real space. The end users as identities may be referred to as "real users".

The identities in the present embodiment may also include organizations such as companies, associations, etc. The identity of such organizations may also include real organizations that exist in real space and organizations that exist in the metaverse associated with such real organizations. In addition, the identities in the present embodiment may include real users, real organizations, avatars, etc., as IP holders who own intellectual property (IP) such as images, texts, songs, etc., in two or three dimensions.

The identity management device 400 stores the avatars generated by the avatar generation system 100 as identities to be managed. The identity management device 400 uploads the avatar stored as a management target to the network service environment 500. The network service environment 500 provides network services to end users using the avatars provided by the network service environment 500.

In addition, the identity management device 400 adds authenticity information to an avatar to be managed, such that the authenticity of the avatar can be confirmed.

In response to an authenticity query (authenticity confirmation request) about the avatar used in the network service provided for end user terminal 300, the identity management device 400 determines the authenticity of the avatar subject to the authenticity query and transmits the determination result to the end user terminal 300.

The identity management device 400 also causes the VC issuance system 600 to issue information as an identity certificate (avatar identification information) to be used to identify the avatar itself to be managed. The identity management device 400 can store the issued avatar identification information to make it a management target.

Specifically, in response to an avatar identification request from a network service in the network service environment 500, the identity management unit 400 transmits the avatar identification information of the avatar to the network service from which the identification request is transmitted. At this time, the identity management device 400 can sign (digitally sign) (encrypt) the identification information to be transmitted using the secret key associated with the target avatar.

The network service environment 500 is an environment that provides one or more network services. Specifically, the network service environment 500 is provided with one or more service provision systems 510 that provide a predetermined network service. The service provision systems 510 may, for example, be configured as web servers or application servers constructed in accordance with the content of the network service to be provided.

The network services provided by the service provision system 510 may be avatar-based websites, network games, web conferencing systems, etc. The network services using avatars may include those in which avatars are made to exist in a metaverse as a three-dimensional virtual space and to act in the metaverse. Specifically, network services may include services such as marketplaces where avatars can purchase products, etc., at shops, etc., in the metaverse, services where avatars can buy and sell directly between avatars in the metaverse, services where celebrities or specific characters can exist in the metaverse, as well as services such as weather forecasting with avatars as weather forecasters, medical consultations with avatars as doctors, and fortune telling with avatars as fortune tellers are also possible.

The service provision system 510 may be capable of providing a plurality of network services. A plurality of metaverses may be provided for the service provision system 510 that provides a metaverse as a network service.

The service provision system 510 that provides network services enabling transactions in the metaverse, such as marketplaces and buying and selling between avatars, includes a transaction control unit 511 that controls transactions.

A VC issuance system 600 is a system that issues identification information in response to a request for issuance. The VC issuance system 600 may be configured by, for example, one or more devices connected to a network.

The VC issuance system 600 of the present embodiment is made capable of issuing identification information that verifies the identity of the end user, as well as the identity of the avatar itself, which is subject to management by the identity management device 400.

The VC issuance system 600 may be capable of issuing a plurality of pieces of identification information corresponding to each of a plurality of different issuers.

In addition, the VC issuance system 600 includes a public VC issuance system 610 and a private VC issuance system 620.

The public VC issuance system 610 issues the identification information (public identification information) of a publicly-issued issuer. The public issuer may be, for example, issuers that are run by the government, have been approved by the government, or have a certain level of social credibility. Specifically, public issuers include, for example, organizations that issue licenses according to specified qualifications, approved companies, educational institutions, local governments, financial institutions, etc. For example, financial institutions may issue public identification information used for payments in the metaverse. For example, public identification information for entering specific facilities in the metaverse could be issued by the company operating the facility, educational institutions, local government agencies, etc.

The private VC issuance system 620 issues identification information (private identification information) for private issuers. The private issuer may be, for example, volunteer clubs, civic sports organizations, school clubs and other private organizations. The private identification information issued by such the private issuer can, for example, verify that the avatar belongs to the corresponding private organization, that an award or license issued by the corresponding private organization has been added to the avatar, etc.

The private issuer may also include, for example, fans (supporters) of the artist. Private identification information issued by the artist's fans can be assigned to the artist's avatar, for example, to verify that the artist's avatar is a being supported by the fans.

The private issuer may also include an end user. As an example, an end user as a private issuer may issue private identification information of being a friend. The avatar to whom the private identification information of being the friend is added may, for example, verify to be friends with the avatar of the end user who is the private issuer.

The end user as a private issuer may also issue, to the avatar, private identification information of belonging to an organization, for example, to verify that he or she belongs to an organization such as a company. In this case, the issued private identification information of belonging to the organization may be managed as such that the corresponding avatar carries and holds it at all times.

The avatar holding private identification information of belonging to the organization can verify that he or she is an organizational member of the same organization as other avatars holding private identification information of belonging to the same organization.

The private issuer may be, for example, an operator of the service delivery system 510. As an example, the service delivery system 510 as a private issuer may issue private identification information of being good. The avatar of the end user to whom the private identification information of being good has been added can verify, for example, that the end user has not committed any fraudulent acts or the like in the metaverse provided by the service provision system 510 and is good.

The private issuer may also include an event organizer or the like. As an example, a private issuer may issue private identification information as a ticket for an event to be held in a given service delivery system 510 metaverse. An avatar to whom the private identification information as a ticket is added may verify that he/she is eligible to participate in the event to be held in the metaverse of the given service delivery system 510.

As can be seen from the private issuer example above, the private identification information can function as identification of an avatar or avatar-enabled user based on the relationship between individuals and the assessment made by the individual by the private issuer.

Other examples of issuing identification information based on relationships between individuals include, for example, private identification information based on the connection relationships in social network systems (SNS), which may be issued. In this case, the private identification information may, for example, verify that a user or avatar is a friend of a friend of the private issuer in the SNS.

As an example of private identification information based on evaluation by an individual, private identification information based on the user's evaluation as a user (seller or buyer) in a network service where transactions are carried out between individuals, for example, may be issuable.

As an example of private identification information based on evaluations by other individuals, private identification information may be issued based on information indicating the user's credibility (credibility information) provided by a service that assesses the credibility of individuals by entering information such as the user's age, gender, occupation and purchase history.

It can be said that the degree of credibility of identification information to verify identity depends on who issues the identification information and what kind of identity it verifies.

The VC issuance system 600 may therefore include a credibility setting unit (not shown) that allows a credit level to be set for the identification information to be issued, indicating the degree of credibility of the identification function. The credibility may be expressed, for example, by a numerical value. By setting the credibility for the identification information in this way, the degree of credibility of the identification information is explicitly indicated.

As an example of the credit setting, the VC issuance system 600 may, for example, set the credit of identification information issued by the official issuer above a certain level. The identification information issued by a public issuer with high social credibility can be said to have a higher degree of the credibility than identification information issued by a private issuer.

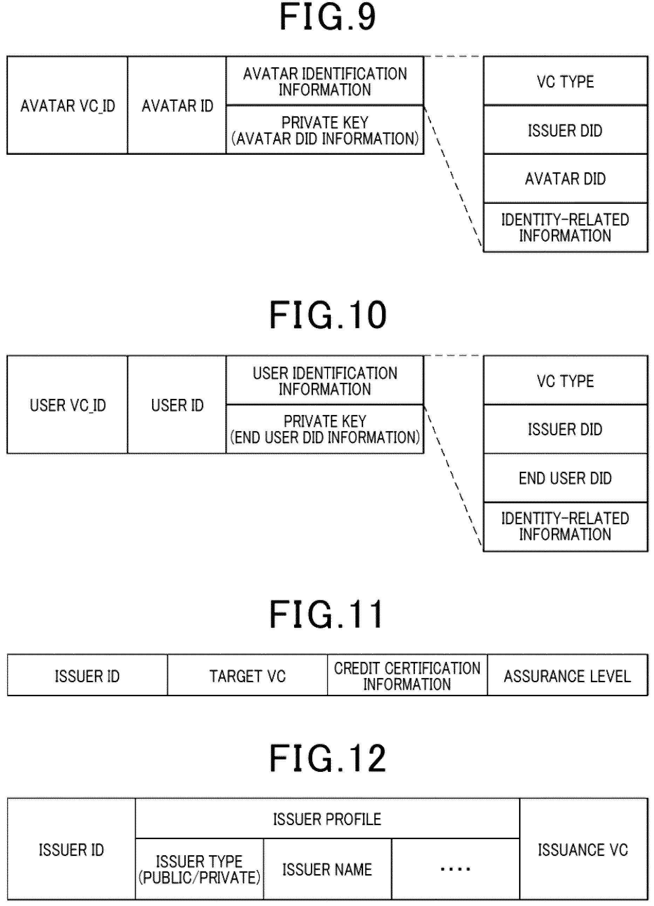

In addition, information indicating the credibility of the issuer (issuer credibility) may be stored in the issuer information (Fig. 12) described below, and the identification information issued by the corresponding issuer may be set to a credibility corresponding to the issuer credibility.

The credibility of the identification information may be stored in the field of identification information (avatar identification information) according to the structure of Fig. 9 below.

The credibility of the identification information may also be set by an organization or other body other than the VC issuance system 600. For example, the credibility of the identification information may be set by the credibility setting unit (not shown) in the identity management unit 400, or by each of the credibility setting units (not shown) in the service provision system 510, individually according to the service provided.

For example, the service provision system 510 may also define the type of identification information and the threshold for credibility as a condition for receiving the service provided. In this case, the service provision system 510 may limit the provision of the service to identities, such as avatars and end users, that have identity credentials that meet the defined conditions.

In providing the service, the service provision system 510 may vary the grade and content of the service depending on the credibility of the identification information possessed by the identity.

In requesting identification information in this way, the service provision system 510 may request only identification information issued by issuers with high credibility, such as, for example, public issuers. The service provision system 510 may also request a plurality of identity credentials issued by a plurality of different issuers. In this case, the service provision system 510 may request a mixture of public and private identification information, or may request only one of the public and private identification information.

The service provision system 510 may also request a predetermined issuer to issue the identification information required in response to the services provided in the service provision system 510. In this case, the service provision system 510 may also specify the definition of the credibility of the identification information to be requested to be issued.

The identification information issued by the VC issuance system 600 of the present embodiment may, for example, correspond to a verifiable credential (VC). In the following description, the case in which the identification information in the present embodiment corresponds to a VC is taken as an example. Due to this, in the following description, the identity credit information issued by the VC issuance system 600 may be described as VC.

In the present embodiment, the identification information that verifies the identity of the avatar itself is described as avatar identification information (avatar VC) and is distinguished from the identification information that verifies the identity of the end user (end user identification information (end user VC)). When no particular distinction is made between avatar identification information and end user identification information, it may be described as identification information or VC.

The DPKI system 700 manages public keys in response to the decentralized public key infrastructure (DPKI).

When issuing identification information as a VC, the VC issuance system 600 of the present embodiment generates a pair of public and private keys corresponding to the issuer DID, which is a decentralized identifier (DID) that uniquely identifies the issuing authority. The VC issuance system 600also generates a pair of public and private keys corresponding to the holder DID (end user DID or avatar DID), which is a DID that uniquely indicates the holder (end user or avatar) of the identification information.

The VC issuance system 600 registers the generated public keys (the public key corresponding to the issuer DID and the public key corresponding to the holder DID) with the DPKI system 700, which stores the registered public keys with the respective issuer DID and holder DID.

The DPKI system 700 may be made to register public keys by storing them in a blockchain. The DPKI system 700 may configured by a device acting as a node corresponding to the blockchain that stores the public key.

When the need to verify the identity of a holder arises, the service provision system 510 obtains the public key associated with the holder DID of the target holder from the DPKI system 700. The service provision system 510 can perform a determination as to whether the identification information is valid (identity verification) by decrypting the identification information using the acquired public key.

A wallet management system 800 manages wallets. The wallets store information corresponding to end users, including assets, under the cryptocurrency use environment.

The wallet management system 800 can manage wallets registered (opened) as owned by end users.

The wallet management system 800 can also manage the wallets added to avatars. The addition of a wallet to an avatar may be implemented, for example, by the corresponding end user operating the end user terminal 300, opening a wallet in the wallet management system 800, and registering the opened wallet by associating it with the avatar.

The wallet management system 800 may be made to manage wallet data in a blockchain.

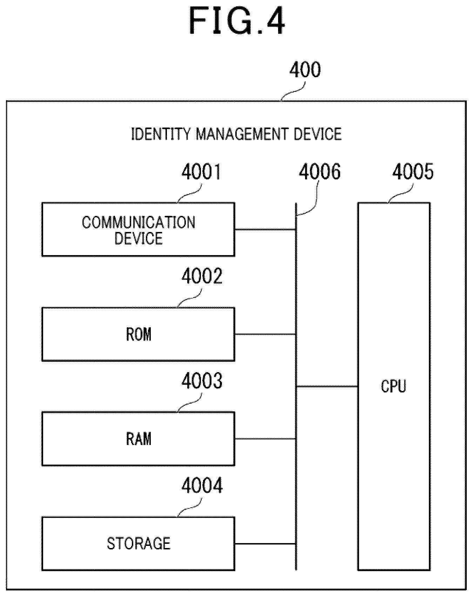

Fig. 4 shows the hardware configuration of the identity management device 400. The identity management device 400 in the same figure has a communication device 4001, a read only memory (ROM) 4002, a random access memory (RAM) 4003, a storage 4004, and a central processing unit (CPU) 4005. The communication device 4001, the ROM 4002, the RAM 4003, the storage 4004, and the CPU 4005 are connected by a bus 4006.

The communication device 4001 is a device that supports communication via a network.

The ROM 4002 stores non-rewritable data.

The RAM 4003 temporarily stores data used for operations performed by the CPU 4005.

The storage 4004 is, for example, a hard disc drive (HDD) or solid-state drive (SSD), which stores various data, including, for example, program data.

The CPU 4005 executes operations according to various controls, processes, etc. by executing programs stored in the storage 4004.

Although not shown in the same figure, a graphics processing unit (GPU) may also be provided in the identity management unit 400.

The same functionality as the identity management device 400 may be obtained by a plurality of network terminals distributed in such a way that transactions can be performed in response to the blockchain.

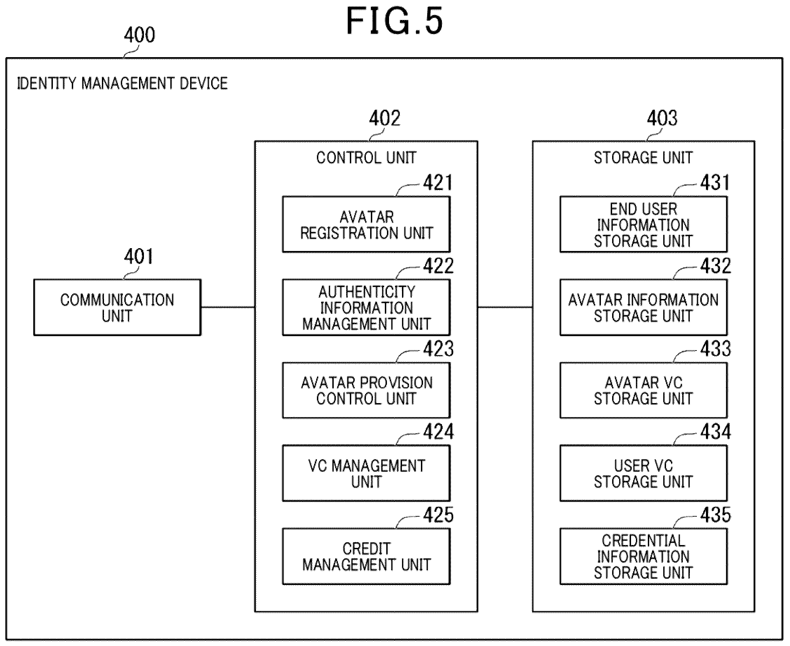

Fig. 5 shows an example of the functional configuration of an identity management device 400. The functions as the identity management device 400 in the same figure are implemented by the central processing unit (CPU) equipped with the identity management device 400 executing a program.

The identity management device 400 in the same figure has a communication unit 401, a control unit 402 and a memory unit 403.

The communication unit 401 communicates via a network.

The control unit 402 performs various controls in the identity management device 400. The control unit 402 in the same figure has an avatar registration unit 421, an authenticity information management unit 422, an avatar provision control unit 423, and a VC management unit 424 and a credit management unit 425.

The avatar registration unit 421 registers avatars generated by the avatar generation system 100 as objects to be managed. The registration of avatars here is performed by storing the avatar information (described below) of the avatar to be managed in the avatar information storage unit 432.

Avatars registered by the avatar registration unit 421 can be used by the service provision system 510 in the network service environment 500 for its own network services.

The authenticity information management unit 422 (an example of an authenticity information addition unit and an authenticity confirmation unit) manages the authenticity information of avatars. Specifically, the authenticity certification information management unit 422 adds authenticity certification information to avatars that are registered. The authenticity information is described below.

In response to an authenticity confirmation request from end user terminal 300, the authenticity certification information management unit 422 performs authenticity judgments on the avatars subject to authenticity confirmation using the authenticity certification information assigned to the registered avatars. The authenticity information management unit 422 transmits the judgment result on authenticity to the end user terminal 300 from which the authenticity confirmation request has been transmitted.

The avatar provision control unit 423 executes control over the provision of registered avatars to the service provision system 510 (transmission of avatar information). The identity management unit 400 and each service provision system 510 may be connected by an API, such that the avatar provision control unit 423 transmits avatar data to the service provision system 510 under an online connection.

The VC management unit 424 manages the VC (identification information) of users in real space or avatars in the metaverse. The VC to be managed by the VC management unit 424 includes user identification information (user VC) corresponding to the real user and avatar identification information (avatar VC) corresponding to the avatar

The VC management part 424 requests the identification information of the identity (real user or avatar) to the VC issuance system 600 via the network. The VC issuance system 600 issues the identification information of the target identity in response to the request. The VC issuance system 600 transmits the issued identification information and the corresponding secret key (secret key corresponding to the issuer DID and secret key corresponding to the holder DID) are transmitted to the identity management unit 400. The VC management unit 424 maps the transmitted identification information (avatar identification information or user identification information) and the secret key to the avatar VC storage 433 or the user VC storage 434.

The credit management unit 425 evaluates the credibility of the issuer of the avatar identification information to be added to the avatar based on the credit information stored by the credit information storage unit 435.

The memory 403 stores various types of information supported by the identity management device unit 400. The storage unit 403 has an end user information storage unit 431, an avatar information storage unit 432, an avatar VC storage unit 433, a user VC storage unit 434, and a credit information storage unit 435.

The end user information storage unit 431 stores end user information. The end user information is information about end users who have registered one or more avatars corresponding to themselves with the identity management device 400.

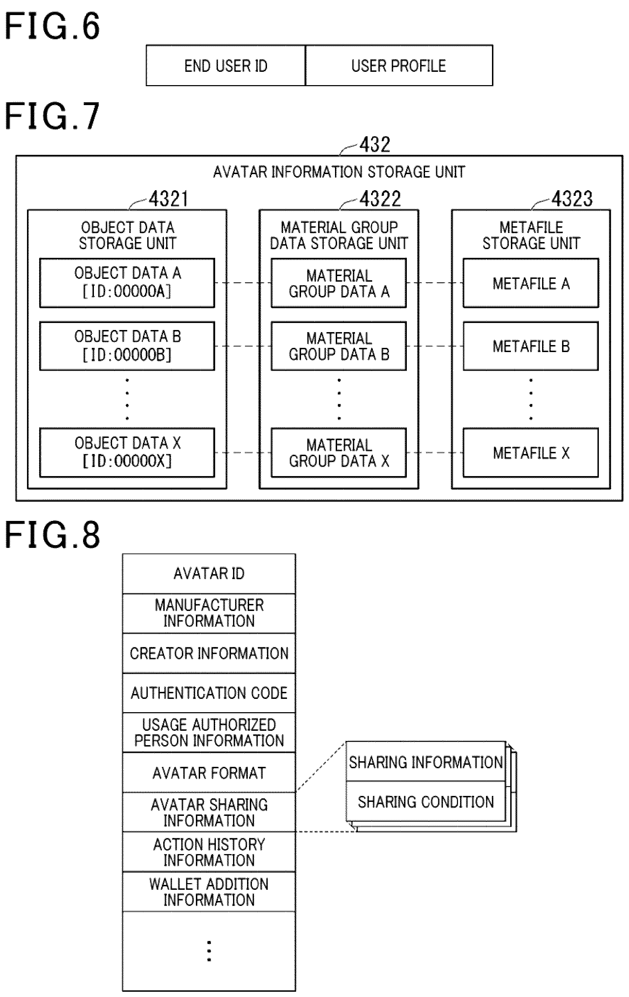

Fig. 6 shows an example of end user information corresponding to one end user. The end user information in the same figure includes an end user ID and a user profile information area. The area of the end user ID stores an end user ID that uniquely indicates the corresponding end user.

The area of the user profile information stores the user profile information of the corresponding end user. The user profile information may include, for example, a name, a gender, and an address of the end user.

The avatar information storage unit 432 stores avatar information.

Fig. 7 shows an example of avatar information stored by the avatar information storage unit 432. The avatar information storage unit 432 in the same figure includes an object data storage unit 4321, a material group data storage unit 4322, and a metafile storage unit 4323.

The avatar information corresponding to one avatar includes, for example, object data, material group data, and metafile.

The object data storage unit 4321 stores object data for each registered avatar.

The material group data storage unit 4322 stores material group data for each registered avatar.

The metafile storage unit 4323 stores the metafile for each registered avatar.

Between the object data storage 4321, the material group data storage 4322, and the metafile storage 4323, the object data, the material group data, and the metafile corresponding to the same avatar are associated by the same avatar ID.

Specifically, object data A, material group data A, and metafile A stored in the object data storage 4321, the material group data storage 4322, and the metafile storage 4323 respectively, corresponding to an avatar A, are associated by an avatar ID [00000A], which uniquely indicates the avatar A.

The object data is data of an entity of an object as the corresponding avatar. The object data may be configured, for example, by combining components such as a head and a body generated using a predetermined avatar material.

The material group data is data containing one or more avatar materials that add a predetermined mode to the avatar entity by object data. The material group data may include, for example, voice material, emotion material, movement material, spatial material, etc. With the material group data, the avatar object can speak, its facial expression can be changed, it can be given movement, and it can exist in a virtual space with a predetermined design.

The metafile contains one or more metadata assigned to the corresponding avatar.

Fig. 8 shows an example of a metafile corresponding to one avatar. The metafile shown in the same figure includes metadata such as avatar ID, generation source information, creator information, authentication code, authorized user information, avatar format, avatar sharing information, action history information, and wallet holding information.

The avatar ID is an identifier that uniquely indicates the avatar in the avatar information stored by the avatar information storage unit 432. The avatar ID may be issued by the avatar registration unit 421 upon registration of the corresponding avatar. As described above, the object data, the material group data, and the metafile corresponding to the same avatar are associated with the avatar ID.

The generation source information is information about the original person (source of generation) of the corresponding avatar. The generation source information may include, as information items, generation source ID, profile information of person of the generation source, etc. The generation source information may be provided by the avatar generation system 100. If the person who is the generation source is an end user, the end user ID of the corresponding end user may be used for the generation source ID.

The creator information is information about the creator of the corresponding avatar. The creator may be, for example, a company or other organization or individual to whom the integration system 120 that generated the corresponding avatar corresponds, in the avatar generation system 100.

The authentication code is a code issued by the identity management unit 400 to the avatar to be provided when the service provision system 510 receives the avatar provision (transmission of avatar information) from the identity management unit 400.

The authorized user information is information on the authorized user. The authorized user is a person who has the authority to use the corresponding avatar. The authorized user may be an end user as the person from whom the avatar is generated. In this case, the authorized user can cause the avatar that has him/herself as the originator to exist in the metaverse provided by the service provision system 510 and to act in the metaverse, for example, in response to operations of the end user terminal 300. The authorized user may also be an operator of a particular service provision system 510 or the like. The authorized user information is information indicating such authorized users. Specifically, the authorized user information may be a user account, such as an authorized user ID, user name and password registered by the authorized user. If the authorized user is an end user, the end user ID may be used as the authorized user ID.

In addition to the original authorized user (primary authorized user), for example as the end user from whom the avatar has been generated, the authorized user information may also include an authorized user (secondary authorized user) indicating other end users to whom use authorization has been added, for example.

The avatar format indicates the file format, specifications, etc., of the avatar as the format of the corresponding avatar.

In the present embodiment, for example, one avatar can be shared with a third party, depending on the authorization of the user authority. The avatar sharing information is information about the sharing of the corresponding avatar.

The avatar sharing information in the same figure includes sharer information and sharing conditions. The sharer information is information of a sharer who is authorized to share the corresponding avatar with the authorized user. The sharer information may be, for example, a user account of the sharer. The sharing conditions are conditions under which the corresponding avatar can be shared by the sharers. The sharing conditions may include information indicating, for example, an expiry date, a service provision system 510 specified as being available for the avatar by the sharer, etc.

The behavioral history information is information indicating the history of the corresponding avatar's behavior in the metaverse provided by each service provision system 510. The behavioral history information of each avatar may be obtained, for example, by the avatar provisioning control unit 423 from the respective service provisioning system 510.

Wallet holding information is information on wallet holdings of the corresponding avatar.

The description is returned to Fig. 5. The avatar VC storage unit 433 stores avatar identification information (avatar VC) for each registered avatar. The avatar VC storage 433 also stores the secret keys (secret key corresponding to the issuer DID and secret key corresponding to the avatar DID) associated with the avatar identification information.

Fig. 9 shows an example of the information (avatar identification information and secret key) stored by the avatar VC storage unit 433 corresponding to one avatar.

As shown in the same figure, in the avatar VC storage unit 433, the avatar identification information and the secret key corresponding to the avatar DID are stored in association with the avatar VC_ID and the avatar ID. The avatar VC_ID is an identifier uniquely added to the corresponding avatar identification information.

In this way, the avatar identification information and secret key can be associated with the avatar ID, such that the avatar identification information and secret key can be associated with and managed for the avatar information of the corresponding avatar.

The avatar identification information includes fields for VC type, issuer DID, avatar DID and avatar-related information.

The VC type field stores information indicating the type (type, format) of identification information.

The issuer DID field stores the issuer DID indicating the issuer of the avatar identification information.

The avatar DID field stores the avatar DID of the corresponding avatar.

The identity-related information field stores identity-related information of the corresponding avatar. The content of the information contained in the identity-related information is not limited, but may include, for example, rights, qualifications and other information acquired by the avatar as a result of its actions in the metaverse. The identity-related information may also include the same behavioral history information as stored in avatar information.

At least one of the avatar identification information and the secret key may be stored in a blockchain under the control of the VC management unit 424 of the identity management device 400. If both the avatar identification information and the secret key are stored in the blockchain, the avatar VC storage unit 433 may be omitted.

The description is returned to Fig. 5. The user VC storage unit 434 stores user identification information (user VC) for each end user (real user) registered (stored) in the end user information storage unit 431. The user VC storage 434 also stores the secret key (secret key corresponding to the issuer DID and secret key corresponding to the user DID) associated with the user identification information.

Fig. 10 shows an example of the information (user identification information and secret key) stored by the user VC storage unit 434 for one user (end user).

As shown in the same figure, in the user VC storage unit 434, the user identification information and the secret key corresponding to the user DID are stored in correspondence with the user VC_ID and the user ID. The user VC_ID is an identifier uniquely added to the corresponding user identification information.

In this way, user identification information and secret keys can be associated with user IDs, such that user identification information and secret keys can be associated and managed with the corresponding user information of the corresponding user.

The user identification information includes fields for VC type, issuer DID, user DID and user-related information.

The identity-related information field stores information related to the corresponding user (identity-related information). The content of the information contained in the identity-related information is not limited, but may include, for example, information on rights, qualifications, etc. acquired by the user as a result of the corresponding user's behavior in the real space (shopping, moving to a predetermined point, etc.). The identity-related information may also include behavioral history information about the corresponding real user's behavior in the real space.

At least one of the user identification information and the secret key may be stored in a blockchain under the control of the VC management unit 424 of the identity management device 400. If both the user identification information and the secret key are stored in the blockchain, the user VC storage unit 434 may be omitted.

The identity management device 400 may be configured by a single device, or implemented by assigning predetermined functions to a plurality of devices communicably connected on a network, and then having the plurality of devices cooperate to perform the processing.

The explanation is returned to Fig. 5. The credit information storage unit 435 stores information related to the credit added to the issuer issuing the avatar identification information (credit information).

Fig. 11 shows an example of the structure of credit information corresponding to an issuer issuing one avatar identification information. The credit information in the same figure includes areas for issuer ID, target VC, credit certification information, and assurance level.

The Issuer ID area stores an issuer ID that uniquely indicates the issuer of the credit target.

The area of the target VC indicates the identification information issued by the issuer subject to credit. The credit information indicates the credibility of the issuer ID, but having the issuer ID and the target VC allows credit to be added to the issuer in correspondence with each identification information. In other words, if one issuer issues multiple identification information, it is possible to set credit for each identification information for that one issuer.

The area of credit information stores information indicating the credibility of the issuer of the correspondence (credit information). The credit information may include, for example, information indicating the basis for the credibility of the corresponding issuer as a person issuing identification information.

If the corresponding issuer is a public issuer issuing public identification information, the credit information may have content that verifies that the issuer has a public status, for example, the registered details of an institution, company, etc. as issuer. The credit information may also have content that demonstrates the issuer's basis for issuing private identification information, if the corresponding issuer is a private issuer issuing private identification information. For example, in the case of adding private identification information indicating the existence of fan support for an avatar corresponding to a celebrity, the private identification information may have content that the issuer of the corresponding private identification information verifies itself to be a fan of the corresponding celebrity.

The area of the assurance level stores the assurance level. The assurance level indicates a level of credibility (assurance level) that is guaranteed for a combination of the corresponding issuer and the target VC. The assurance level may be set, for example, by the identity management device 400 or the VC issuance system 600.

The VC issuance system 600 may also store a database on issuers (issuer database).

Fig. 12 shows an example of the structure of the records (issuer information) stored for one issuer in the issuer database. The issuer Information in the same figure includes areas of an issuer ID, issuer profile, and issuance VC.

The area of the issuer ID stores the issuer ID of the corresponding issuer.

The area of the issuer profile stores the issuer profile. The issuer profile is information indicating the profile of the issuer. As shown in the same figure, the issuer profile may include areas such as, for example, an issuer type and issuer name. The area of the issuer type stores information indicating, for example, whether the corresponding issuer is, for example, a public or private issuer as a type of issuer. The area of the issuer name stores the name of the corresponding issuer (issuer name).

The area of the issuance VC stores information on the identification information issued by the corresponding issuer.

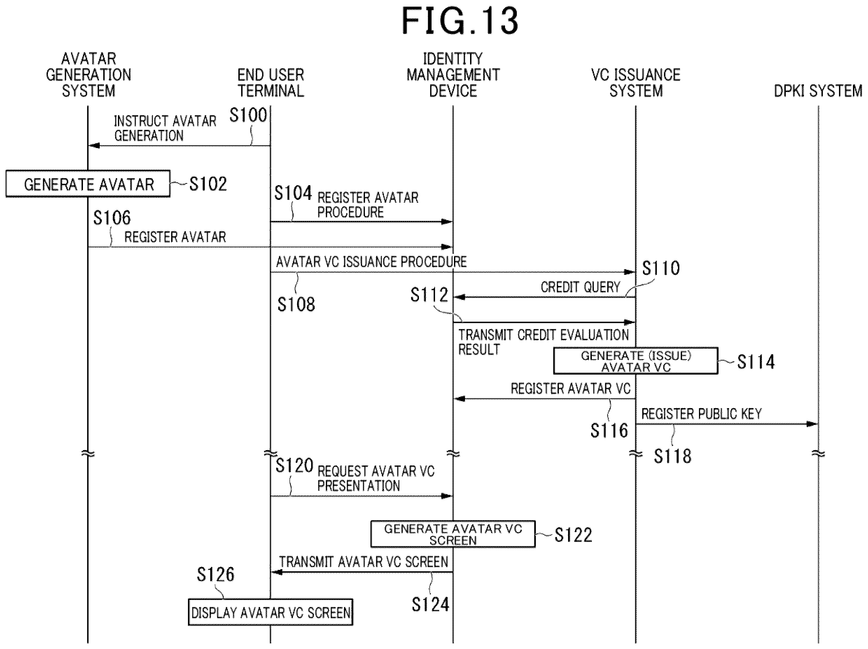

Referring to the sequence diagram in Fig. 13, an example of a processing procedure performed by the identity management system of the present embodiment in relation to the generation of avatars, registration and registration of avatar authentication information is described.

Step S100: The end user accesses the avatar generation system 100 by operating the end user terminal 300 in his/her possession and performs the avatar generation operation. The end user terminal 300 transmits avatar generation instructions to the avatar generation system 100 in response to the avatar generation operation.

Step S102: The avatar generation system executes the process of generating avatars in response to avatar generation instructions.

Step S104: The end user operates the end user terminal 300 to perform the avatar registration procedure such that the generated avatar is registered at the identity management device 400. In the avatar registration procedure, the avatar to be registered is specified and the identity management device 400 is specified as the registration destination for the specified avatar.

Step S106: In response to the avatar registration procedure of step S104, the avatar generation system 100 and the identity management unit 400 perform processes corresponding to avatar registration.

First, the avatar generation system 100 uploads the avatar information of the avatar designated as the registration target by the avatar registration procedure to the identity management unit 400.

The avatar registration unit 421 of the identity management unit 400 stores the uploaded avatar information in the avatar information storage unit 432.

In the step S106, the authenticity information management unit 422 of the identity management device 400 adds authenticity information to the avatar that is the subject of the present registration.

The authenticity information is information that verifies the authenticity of the avatar itself in the service provision system 510 metaverse, etc. Here, the avatar's authenticity means that the avatar is not fake or tampered with and is valid. Examples of inauthentic (unjustified) avatars include avatars whose face and other avatar materials have been falsified, for example by being replaced with fake materials that are different from the original, and avatars that have been copied without the permission of the creator or other persons with certain rights over the avatar.

Specifically, the authenticity information management unit 422 may assign a digital watermark (an example of authenticity information) and a digital authenticity certificate (an example of authenticity information) to the target avatar as follows.

The authenticity information management unit 422 assigns information that is unique to the target avatar, such as an avatar ID, to the object data of the target avatar as a watermark. The digital watermark assigned to the avatar's object data is preferably of a difficult-to-perceive type, for example, but may also be of a perceivable type.

The authenticity information management unit 422 also adds digital authenticity certificates to the target avatars.

In this case, the authenticity information management unit 422 may be made to add an authenticity certificate to the target avatar that certifies the creator of the target avatar, the storage location (URL) of the target avatar, the service provision system 510 using the target avatar, etc.

Authenticity certificates may be made available, for example, by having the authenticity certificate information management unit 422 perform a predetermined transaction with an authenticity certificate issuing authority in the network, such that the issuing authority issues an authenticity certificate for the avatar in question. Such authenticity certificates may be managed on the network, for example by being associated with the avatar ID of the target avatar (an example of information unique to the avatar to be registered).

As an example, the authenticity certificate added to the avatar by the authenticity information management unit 422 may be a non-fungible token (NFT) managed in a blockchain. In this case, the authenticity information management unit 422 may, for example, use an external NFT platform to add the authenticity certificate to the avatar. The authenticity information management unit 422 may also be configured to add the avatar an authenticity certificate generated using quantum-resistant cryptography or quantum-resistant blockchain.

The authenticity certificate added to the avatar by the authenticity information management unit 422 may be a non-transferable NFT, SoulBound token (SBT). In this case, the authenticity information management unit 422 may add the SBT as authenticity information to the avatar instead of the NFT, or may add both the NFT and the SBT to the avatar. When assigning NFT and SBT to the avatar as authenticity information, the authenticity information management unit 422 may select and use either NFT or SBT in proving the authenticity of the avatar, or it may use NFT and SBT together.

In addition, the authenticity information management unit 422 issues an authentication code that is unique to the avatar that is the target of the current registration in said step S106. The authentication code is a code provided together with the avatar data of the target avatar to the service provision system 510 that provides network services using the target avatar. The authentication code is used to determine the authenticity of the avatar in response to a request from the end user as described below.

The authentication code may, for example, be an avatar ID, as it is uniquely associated with the target avatar.

However, it is preferable to use a code generated independently of the avatar ID as an authentication code, for example, when security is to be enhanced against the avatar being identified or registration information that may contain the user's personal information being identified.

The authenticity information management unit 422 adds the issued authentication code as one of the metadata in the metafile stored in the metafile storage unit 4323 associated with the target avatar (Fig. 7).

Step S108: The end user, who is the creator of the avatar registered according to step S106, makes the end user terminal 300 access the VC issuance system 600 and operates the procedures for issuing avatar identification information. The end user terminal 300 executes the issuance procedure in response to the operation.

As part of the issuance procedure, the end user terminal 300 may transmit an issuance request to the VC issuance system 600 together with the avatar information that is the subject of the avatar identification information. The issuance request may also include information specifying the avatar identification information to be issued (issuance certificate designation information).

In response to the issuance request, the VC issuance system 600 may determine the avatar identification information to be issued to the target avatar.

In transmitting the issuance request, the end user terminal 300 may once obtain the avatar information from the identity management device 400 and transmit the obtained avatar information to the VC issuance system 600, or may specify the avatar to be transmitted to the identity management device 400 and cause the identity management device 400 to transmit the avatar information to the VC issuance system 600.

Step S110: In response to the issuance request from the end user terminal 300 according to step S108, the VC issuance system 600 makes a credit query to the identity management device 400. The credit enquiry is a command to inquire whether the issuer of the avatar identification information to be issued this time is credited. In other words, the credit query inquires whether the issuer has a certain level of credibility. The credit query includes an issuer ID indicating the issuer of the avatar identification information that is being issued to the avatar this time.

Step S112: The credit management unit 425 searches the credit information storing the same issuer ID as contained in the received credit enquiry from the credit information storage unit 435. The credit management unit 425 refers to the credit certification information and guarantee level stored by the retrieved credit information and evaluates the credibility of the issuer of the avatar identification information that is about to be issued to the avatar in the present case.

Specifically, the credit management unit 425 may determine whether the issuer is creditworthy as an assessment of credibility. For example, no credit information is stored in the credit information storage unit 435 for issuers who have not been added credit. In this case, the credit management unit 425 may determine whether the issuer is creditworthy based on whether credit information is stored in the credit information storage 435. If the credibility is determined to be creditworthy, the credit management unit 425 may set the level of credibility based on the content of the credit certification information in the credit information and the information indicated by the guarantee level.

The credit control unit 425 transmits the results of the above assessment with regard to the issuer's credit (credit assessment results) to the VC issuance system.

Step S114: If the credit evaluation result transmitted from the identity management device 400 according to step S112 has a certain level of credibility, the VC issuance system 600 generates avatar identification information that certifies the avatar's identity by the avatar information received with the issuance request in step S108. In this case, the VC issuance system 600 generates (issues) an avatar DID indicating the corresponding avatar and also generates a pair of public and private keys corresponding to the avatar DID. The VC issuance system 600 then signs (encrypts) the generated avatar identification information with the private key generated in correspondence with the issuer DID indicating the issuing organization to which it corresponds.

The VC issuance system 600 may include at least part of the content of the received avatar information in the identity-related information.

Step S116: The VC issuance system 600 registers the avatar identification information in the identity management unit 400. Specifically, the avatar identification information (an example of signed identification information) signed by the issuer DID-compliant secret key assigned to the corresponding issuing authority and the avatar DID-compliant secret key of the corresponding avatar are transmitted to the identity management unit 400. The VC management unit 424 of the identity management unit 400 stores the avatar identification information and the secret key corresponding to the avatar DID that are received from the VC issuance system 600 in the avatar VC storage unit 433 by associating them with the avatar ID of the corresponding avatar.

Step S118: The VC issuance system 600 also registers the public keys (issuer DID-compliant public key and avatar DID-compliant public key) generated with the avatar identification information in step S114 with the DPKI system 700.

After registering avatar identification information corresponding to the avatar as described above, the registered avatar identification information can be presented on the end user terminal 300 by display. By presenting the avatar identification information in this way, the end user can confirm whether the avatar identification information has been properly registered for the target avatar.

Referring to the same Fig. 13, an example of a processing procedure for having avatar identification information presented at end user terminal 300 is described.

Step S120: The end user performs an operation to the end user terminal 300 specifying an avatar and indicating the presentation of avatar identification information. The end user terminal 300, in response to the operation, transmits a request to the identity management unit 400 for presentation of avatar identification information of the specified avatar.

Step S122: In the identity management device 400, the VC management unit 424 obtains the avatar identification information of the specified avatar from the avatar VC storage unit 433 in response to receiving a request to present the avatar identification information, and displays the obtained avatar identification information on a screen (avatar Identification information screen) is generated.

Step S124: The VC management unit 424 transmits the avatar identification information screen generated by step S122 to the terminal 300.

Step S126: The end user terminal 300 displays the avatar identification information screen transmitted by step S124 on its display.

In the identity management system of the present embodiment, the end user can confirm the authenticity of the avatar by using the authenticity information assigned to the avatar.

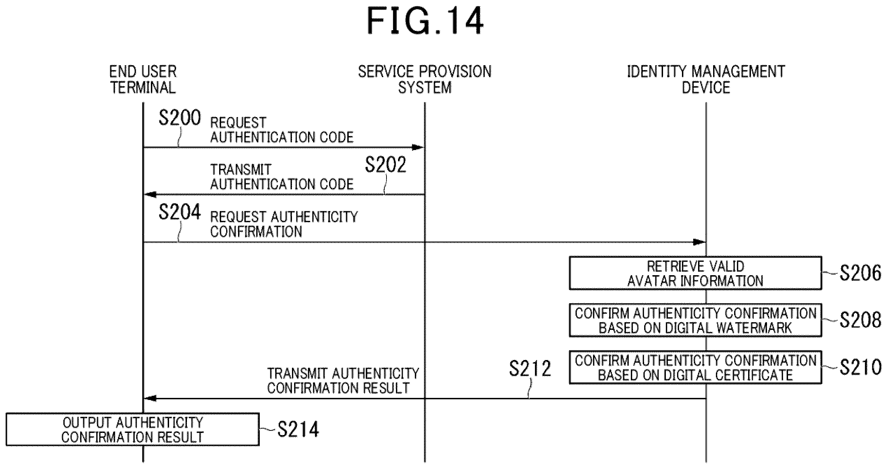

The sequence diagram in Fig. 14 shows an example of a processing procedure performed by the identity management system in response to an authenticity confirmation.

Step S200: An end user receiving a certain network service using end user terminal 300 questions whether the avatar used in the network service is an illegal one.

End users were to confirm the authenticity of the avatars used in the above-described network services (authenticity confirmation). In this case, the user operates the end user terminal 300 and causes the end user terminal 300 to transmit an authentication code request to the service provision system 510 that provides the network service using the avatar subject to the authenticity confirmation.

The authentication code request contains information that can identify the avatar designated as the authenticity confirmation target. The information that can identify the avatar may be, for example, information specifying the content of the network service used by the avatar subject to authenticity confirmation or the name (avatar name) assigned to the avatar subject to authenticity confirmation.

Step S202: The service provision system 510 receives the authentication code request transmitted by step S200. The service provision system 510 obtains the authentication code associated with the avatar used in the network service content specified by the received authentication code request from the avatar storage unit 3131.

The service provision system 510 transmits the obtained authorization code to the end user terminal 300 from which the authorization code request has been transmitted.

Step S204: The end user terminal 300 receives the authentication code transmitted from the service provision system 510 by step S202. Although omitted in the same figure, the end user terminal 300 may report that the authentication code request has been received in response to the transmission of the authentication code request, for example, by display.

When receiving the authentication code, the end user terminal 300 transmits an authenticity confirmation request to the identity management device 400. The authenticity confirmation request may include information that can identify the network service (content) using the avatar subject to authenticity confirmation (network service specific information) and the authentication code received in step S202.

The authenticity information management unit 422 in the identity management unit 400 receives the authenticity confirmation request sent by step S204. In response to the receipt of the authenticity confirmation request, the authenticity information management unit 422 executes the authenticity confirmation process for the avatar subject to authenticity confirmation according to steps S206 to S210 below.

Step S206: The authenticity information management unit 422 searches the avatar information of the avatar registered as valid for the avatar to be confirmed (valid avatar) from the avatar information stored by the avatar information storage unit 432. Due to this, the authenticity information management unit 422 searches for avatar information that includes the authentication code included in the received authenticity confirmation request in the metafile from among the avatar information stored by the avatar information storage unit 432.

If the avatar information of the avatar to be confirmed is not retrieved in said step S206, the avatar itself to which the authentication code included in the received authenticity confirmation request is associated is not registered at the identity management unit 400. In other words, in this case, the authentication code included in the received authenticity confirmation request is itself incorrect. In this case, the authenticity information management unit 422 can determine that the avatar to be confirmed is incorrect on the basis of the authentication code being incorrect. In this case, the following steps S208 and S210 may be skipped, as the authenticity information management unit 422 will not be able to obtain the avatar information of the avatar to be confirmed.

Step S208: If the avatar information of the avatar to be confirmed is retrieved in step S206, the authenticity information management unit 422 executes the process of authenticity confirmation based on the digital watermark.

In this case, the authenticity information management unit 422 accesses the network service specified by the network service specific information included in the received authenticity confirmation request, and obtains an image of the object of the avatar (i.e., the avatar to be confirmed) used in the accessed network service.

The authenticity information management unit 422 extracts the digital watermark from the acquired image of the object of the avatar to be confirmed. The authenticity information management unit 422 also extracts the digital watermark from the object data of the valid avatar. The authenticity information management unit 422 compares the digital watermark extracted from the avatar to be confirmed with the digital watermark extracted from the valid avatar and determines whether they match.

Step S210: The authenticity information management unit 422 also confirms the authenticity of the avatar to be confirmed based on the authenticity information as follows.

The authenticity information management unit 422 obtains the authenticity certificate associated with the avatar ID of the avatar information of the valid avatar retrieved in step S206 from the authenticity certificate issuing office on the network and refers to the content of the authenticity certificate obtained.

The authenticity certificate may contain information indicating, for example, the storage location of the authorized avatar and the network service using the authorized avatar. In this case, the authenticity information management unit 422 compares whether the information (information to be compared), such as the network service where the avatar to be confirmed is used and the storage location of the authorized avatar, matches the description in the authenticity certificate.

By processing steps S206 to S210, the authenticity information management unit 422 can obtain the results of the authenticity confirmation for the avatar to be confirmed as follows.

If the avatar information corresponding to the valid avatar cannot be retrieved by step S206, the authenticity information management unit 422 obtains an authenticity confirmation result that the avatar to be confirmed is fraudulent on the grounds that the authentication code itself associated with the avatar to be confirmed is false, as described above.

The fraudulent manner in which the authentication code is false corresponds, for example, to cases where the avatar to be confirmed has not been generated by the authorized creator and therefore could not be mapped to the authorized authentication code.

If it is determined that the digital watermark of the avatar to be confirmed does not match the digital watermark of the valid avatar according to step S208, the authenticity information management unit 422 can obtain an authenticity confirmation result that the avatar to be confirmed is not valid because the digital watermarks do not match.

The fraudulent manner in which the digital watermarks do not match may be, for example, a case in which a valid avatar is tampered with to generate an avatar to be confirmed, for example by replacing or partially rewriting the face or body material.

If the contents of the information to be compared are determined to be inconsistent with the authenticity certificate by step S210, the authenticity certification information management unit 422 can obtain an authenticity confirmation result that the avatar to be confirmed is incorrect on the grounds that no authenticity certificate has been added.

Examples of irregularities in this case include cases where the creator of the avatar to be confirmed is not an authorized user or where the corresponding authorized avatar is not authorized for use in the network service where the avatar to be confirmed is used.

On the other hand, if it is determined in step S208 that the digital watermark of the avatar to be confirmed matches the digital watermark of the valid avatar, and if it is determined in step S210 that the content of the information to be compared matches the authenticity certificate, the authenticity certificate information management unit 422 will determine that the avatar to be confirmed is a valid avatar and that the authentic the result of the authenticity confirmation is that the avatar to be confirmed is a valid avatar and genuine.

Step S212: The authenticity information management unit 422 transmits information indicating the authenticity confirmation result obtained by the process of steps S206 to S210 (authenticity confirmation result information) to the end user terminal 300 from which the authenticity confirmation request has been transmitted.

The authenticity confirmation result information may include information such as the avatar ID of the avatar to be confirmed, information on the creator, information on the person who generated the avatar, etc. The authenticity confirmation result information may also include information describing the reason why the avatar has been determined to be fraudulent, if the authenticity confirmation result has been obtained as being fraudulent.

Step S214: The end user terminal 300 receives the authenticity confirmation result information transmitted from the identity management device 400 according to step S312. The end user terminal 300 outputs the received authenticity confirmation result information in a predetermined manner.

The end user terminal 300 may, for example, display the authenticity confirmation result information by text or other means. In this case, the information indicating whether the avatar to be confirmed is genuine, the reason if the avatar is incorrect, the avatar ID to be confirmed, information on the creator, etc., may be displayed by means of text, etc., as the result of the confirmation regarding authenticity.

As described above, the identity management system of the present embodiment enables the authenticity of avatars to be confirmed by adding authenticity information to avatars.

The identity management system is then made such that the avatars themselves used in the network service environment 500 have avatar identification information, just as end users using the network have identification information.

By the avatar itself having avatar identification information in this way, for example, when an avatar acts to make a payment in the metaverse, the avatar's identification information can be used instead of the identification information of the end user who is authorized to use the avatar, for example. In other words, in the present embodiment, the avatar acting in the metaverse can use its own avatar identification information to verify that the avatar itself is valid.

In addition, in the present embodiment, the avatar itself can verify its identity by the avatar identification information it possesses when making payments, etc. in the metaverse. Therefore, the degree of dependence on the end user's identification information is reduced when making the avatar perform actions that require identification in the metaverse.

This makes it easy to enable a plurality of end users to share a single avatar. To enable a plurality of end users to share an avatar, for example, an end user as the primary authorized user can set other end users who can use the avatar as the secondary authorized user in the authorized user information in the corresponding avatar information. The authority to use the avatar can be added to the end user described in the authorized user information.

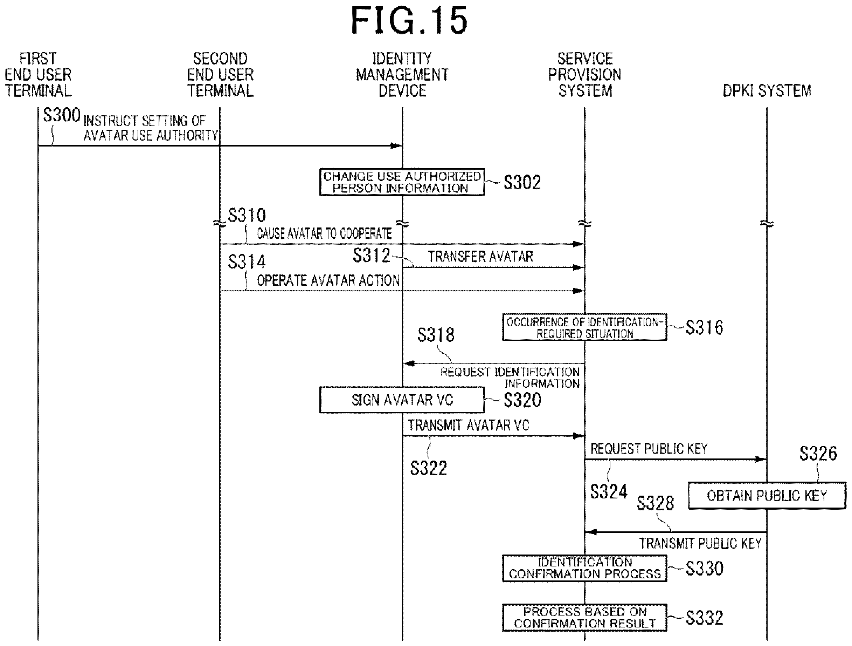

Therefore, with reference to the sequence diagram in Fig. 15, an example of a processing procedure for adding use authorization from an end user as the primary authorized user to another end user and an example of a processing procedure for an avatar operated by an end user who has been added use authorization to receive identification is described.

In the explanation of the diagram, end user terminals 300-1, which are the primary user of the avatar, and end user terminals 300-2, which are other end users who are not primary users of the avatar, are used as end user terminals 300-1, which are the main actors in the execution of the process. 2 of other end users who are not the primary authorized user are included.

In the following description, the end user who is the primary authorized user is also described as the first user, while other end users who are not the primary authorized user are also described as the second end user.

Step S300: The first end user, who is the primary authorized user of the target avatar, can set up other end users who can use the target avatar other than himself. In other words, the first end user can designate a second end user to be authorized to use the target avatar.

Due to this, the first end user accesses the first end user terminal 300-1 to the identity management device 400 and performs an operation to specify the second end user who is authorized to use the target avatar.

The first end user terminal 300-1 instructs the identity management device 400 to set the use authorization of the avatar according to the operation. Specifically, the first end user terminal 300-1 transmits the use authorization setting information to the identity management device 400. The use authorization setting information includes the avatar ID of the target avatar and information on the user account of the specified end user.

Step S302: In the identity management unit 400, the avatar registration unit 421 (an example of a use authorization setting unit) accesses the use authorization person information (Fig. 7) of the avatar information of the target avatar indicated in the received use authorization setting information, and accesses the user account of the second end user specified in the use authorization setting information is stored. As a result, the second end user specified in the use authorization setting information is authorized to use the target avatar.

The second end user who has been authorized to use the avatar in this way can operate the second end user terminal 300-2 to display the target avatar's identification information screen on the second end user terminal 300-2 in a procedure similar to steps S120 to S126 in Fig. 13. The second end user terminal 300-2 can display the target avatar's identification information screen.

Next, an example of a processing procedure for proving the identity of an avatar using avatar identification information in the metaverse is described. When proving the identity of an avatar, the end user using (operating) the avatar can be either the first end user or the second end user, but here we take the case where the avatar's identity is verified under the situation where the second end user is using the avatar as an example.

Step S310: The second end user, to whom the use authorization is attached, causes the second end user terminal 300-2 to access a service provision system 510 that provides a metaverse corresponding to the intended use of the target avatar. The second end user performs an avatar linkage operation to bring the avatar into existence at the service provisioning system 510 that is accessed. The second end user terminal 300-2 notifies the service provisioning system 510 of the access destination of the avatar ID of the target avatar to be present in the metaverse as an avatar linking control in response to the avatar linking operation.

Step S312: The service provision system 510 requests the avatar information of the avatar indicated by the notified avatar ID to the identity management unit 400. The avatar provision control unit 423 of the identity management unit 400 forwards the avatar according to the requested avatar information to the service provision system 510 from which the request is made. The service provision system 510 causes the transferred avatar to exist in the metaverse. At this time, the second end user terminal 300-2 accessing the service provision system 510 displays the presence of the target avatar in the metaverse.

Step S314: The second end user operates the target avatar present in the service provision system 510 to act according to the purpose of use. In response to the operation, the target avatar acts in the metaverse.

Step S316: Here, a situation has occurred in which the avatar needs to verify his/her identity (identification required situation) while the avatar is acting in the metaverse. Specific examples of identification required situations are described below.

Step S318: In response to the occurrence of identification-required situation, the service provider system 510, which is the verifier of the identity, transmits an identification information request to the identity management unit 400 that manages the target avatar. The identification information request is a command requesting avatar identification information of the avatar for which the identification-required situation has occurred. The identification information request may include the avatar ID of the target avatar as information identifying the target avatar.

Step S320: The VC management unit 424 in the identity management unit 400 searches the avatar identification information associated with the same avatar ID as contained in the received identification information request from the avatar VC storage unit 433. The VC management unit 424 signs (encrypts) the retrieved avatar identification information with the secret key corresponding to the avatar DID that is associated with that avatar identification information in the avatar VC storage unit 433.

When registering avatar identification information in step S112 of Fig. 13, the VC management unit 424 may store the avatar identification information to be registered in the avatar VC storage unit 433 after signing it with the secret key corresponding to the avatar DID. In this case, the processing of step S320 may be skipped.

Step S322: The VC management unit 424 transmits the avatar identification information, which has already been signed by the DID-compatible private key according to step S320, to the service provision system 510 from which the identification information request according to step S318 has been transmitted. The transmitted avatar identification information may be appended with the corresponding issuer DID and avatar DID.

Step S324: The service provision system 510 transmits a public key request to the DPKI system 700 requesting the public key corresponding to the received avatar identification information. The public key request includes the issuer DID and avatar DID that were appended to the received avatar identification information.

Step S326: The DPKI system 700 obtains from the blockchain the public key corresponding to the issuer DID and the avatar DID, which correspond to the issuer DID and the avatar DID respectively, included in the received public key request.

Step S328: The DPKI system 700 transmits the two public keys (public key corresponding to the issuer DID and public key corresponding to the avatar DID) obtained by step S326 to the service provider system 510 that transmitted the public key request.

Step S330: The service provision system 510 performs the identity confirmation process. In other words, the service provision system 510 decrypts the avatar identification information received in step S322 using the two public keys transmitted by step S328. If the decryption is successful, then the received avatar identification information is valid and the identity of the target avatar has been verified. If the decryption fails, the received avatar identification information is not valid and the identity of the target avatar could not be verified.

Step S332: The service provision system 510 performs the processing according to the confirmation result according to step S330.

Although Fig. 15 shows the process by which the avatar operated by the second end user as the secondary authorized user receives identification by the avatar identification information, in the present embodiment, identification can be received by the avatar identification information, even when the avatar is operated by the first user as the primary authorized user.

The following is an example of a first end user setting avatar use authorization for another second end user under the identity management system of the present embodiment.

In one case, where the first end user is an executive of a company and the second end user is an employee of the same company, the first end user needs to perform his/her duties by having the avatar corresponding to him/her enter the executive's office in the metaverse at a certain predetermined time. However, the executive has other business at a given time. Therefore, the executive decides to participate in the meeting in the Metaverse by having the second end user, who is an employee, operate his/her avatar on his/her behalf.

In this case, the executive sets up the employee's second end user as the deputy user authorization holder for his/her avatar. The second end user, who is now authorized to use the executive's avatar, can control his/her second end user terminal 300-2 at a predetermined time to enter the executive's avatar into the executive's room in the metaverse and perform work on behalf of the executive, the first end user.

In this case, the avatar of the executive needs to verify his/her identity as an executive in order to enter the executive's room. In this case, if the avatar itself has no identification information set, the identification of the first end user, who is the main user authorization holder and an executive, has to be used to receive the identification. However, in this case, the avatar of the executive cannot be allowed to enter the executive's room because it is the second end user, who is the substitute employee and does not have the identification information of the first end user, who is operating the avatar of the executive.

In contrast, in this system, the executive's avatar itself is given avatar identification information with identity-related information about itself being an executive. Therefore, the avatar of the executive can enter the executive's room in the metaverse, regardless of whether it is operated by the second end user, by receiving identification through the avatar identification information assigned to itself.

Another example is that the first and second end users are family members, the first end user is in his 30s and the second end user is not in his 30s. In addition, in the metaverse, tickets are sold at the ticket office with a discount applied only to people in their 30s during a given discount period.

The first end user has been planning to send his/her avatar to the ticket office in the metaverse to purchase a ticket in order to take advantage of the 30s-only discount. However, the first end user is unable to operate his/her avatar to purchase tickets during the discount period. Therefore, the first end user set the second end user, a family member, as a secondary authorized user and asked the second end user to operate his/her avatar to purchase the ticket during the discount period.

In this case, the avatar must verify by means of identification information that the ticket purchaser is in his or her 30s in order to qualify for the discount. In this case, if the avatar itself has no identification information set, the identification information of the second end user must be used to verify that the avatar is in his/her 30s, but the second end user is not in his/her 30s and cannot verify that he/she is in his/her 30s and cannot purchase a ticket.

However, in the present embodiment, the identity-related information in the identification information given to the avatar itself is made to indicate that the avatar itself is in its 30s, corresponding to the first end user. Thus, regardless of the operation of the second end user, the avatar is verified to be in its 30s and can purchase a ticket with a discount.

Another example is where the avatar is a character from a film series, where the first end user is the actor or film company playing the character and the second end user is a fan of the character. The first end user, who is the primary authorized user, sets up the second end user as a secondary authorized user, e.g. in response to an application from the second end user.

The second end user, who is set as a secondary authorized user, operates his/her second end user terminal 300-2 to cause the character's avatar to act in the metaverse. In other words, the second end user can make the character's avatar behave as they wish in the metaverse. As an example, the second end user can recreate the scene by operating the character's avatar in a metaverse that imitates a space corresponding to the scene in the film.

Under such an operation, in order for a character avatar to exist in the metaverse as a space corresponding to a film scene, it has been necessary to verify the identity of the character avatar, whether the character avatar has been an avatar with an identity authorized by the film company. In this case, the avatar itself as a character is given avatar identification information with identity-related information that it itself is a character in the film. Therefore, regardless of who the second end user is, the character avatar can have the second end user present in the metaverse of the space corresponding to the scene of the film by receiving identification through the avatar identification information assigned to itself.

The present embodiment can also be used in the following cases by adding avatar identification information to the avatar itself.

For example, an end user may wish to participate in an event in the metaverse with an anonymous avatar instead of an avatar explicitly corresponding to him. In this case, participation in the event requires eligibility, which means that the avatar in question has been assigned certain identification information.

In such cases, the end user generates a temporary avatar with a limited number of uses, for example, it can only be used once, and uses the generated temporary avatar as an anonymous avatar.

The temporary avatar generated in this way is made to be added an authenticity certificate by the authenticity certificate information management unit 422, and then the VC issuance system 600 is made to add identification information that satisfies the conditions for eligibility to participate in the event. The identification information added here may be multiple items. Each of the multiple items of identification information to be added may be either public or private identification information.

Temporary avatars may be deleted in response to end user action accordingly after the completion of participation in the event. Alternatively, the temporary avatar may be controlled to be deleted by the avatar registration unit 421 in response to the completion of participation in the event.

By using temporary avatars in this way, it is possible, for example, to have an avatar corresponding to oneself participate in a desired event without the end user's identity being revealed.

In addition, the following advantages can be obtained by providing avatar identification information to the avatar itself, as in the present embodiment.

For example, depending on the nature of the avatar, it may be difficult to strictly define the holder of the avatar in terms of operation. Specifically, when the avatar is an animation or cartoon character, it may be difficult to determine which of the author, publisher, broadcaster or animation producer is the holder of the avatar, due to the rights relationship and other circumstances. Even in such cases, in the case of the present embodiment, the avatar itself can be managed as an independent entity in the metaverse, not dependent on any end user, as avatar identification information is given to the avatar itself.

In addition, the avatar itself can be managed as existing independently in the metaverse by adding avatar identification information to the avatar itself, such that the avatar can continue to exist in the metaverse even when the corresponding user (e.g. the primary authorized user) is no longer able to control it due to death or other reasons. This allows the avatar to continue to exist in the metaverse and be managed.

In addition, the behavioral history of the avatar can be accumulated for the identity-related information contained in the avatar identification information that is assigned to the avatar itself. This accumulation of the avatar's behavioral history in the identity-related information can increase the avatar's credibility in the metaverse. By increasing the credibility of the avatar, the avatar can acquire rights in the metaverse, and the scope of the avatar's activities in the metaverse will be expanded.

The content of the identity-related information in which the avatar's behavioral history is stored as described above may be used as SBT for the avatar, as this information is unique to the avatar in question.

As described above, according to the identity management system of the present embodiment, avatar identification information can be added to the avatar itself, thereby activating the use of the avatar.

In addition, according the identity management system of the present embodiment, it is possible to buy and sell between avatars in the metaverse. Due to this, in the identity management system of the present embodiment, in addition to end users owning wallets, each of the avatars themselves is made capable of owning a wallet.

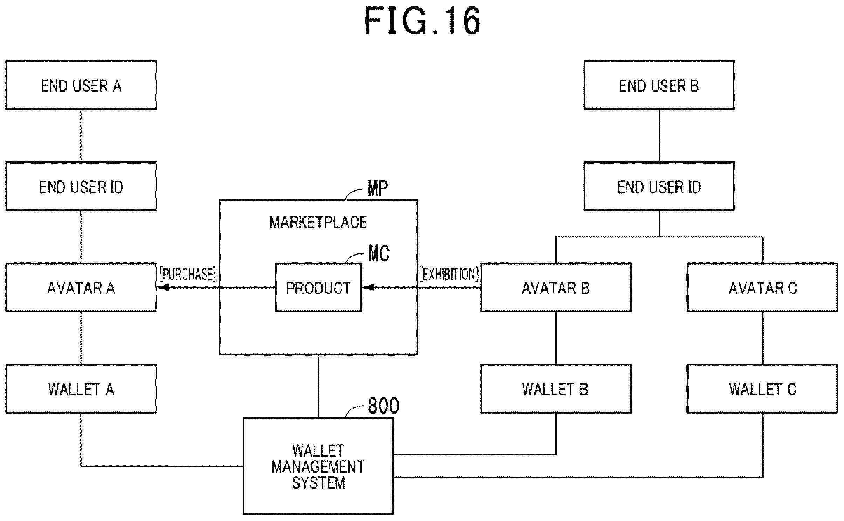

Fig. 16 shows an example of the management arrangements for the holding of avatars' wallets under the identity management system of the present embodiment.

In the same figure, an end user A and an end user B are shown. The end user A and the end user B are each associated with an end user ID. The identity management device 400 of the present embodiment is capable of managing one or more avatars associated with the end user IDs. In the same figure, the end user A is shown as mapping one avatar A to his/her end user ID, and the end user B is shown as mapping two avatars B and C to his/her end user ID.

In addition, an avatar A, an avatar B, and an avatar C are each associated with one wallet A, one wallet B and one wallet C, respectively. In other words, the avatar A has one wallet A, the avatar B has one wallet B, and the avatar C has one wallet C. The wallets held by these avatars are managed by the wallet management system 800.

In Fig. 16, an example of the flow of buying and selling of products MC between the avatar A and the avatar B is shown below.

In response to an operation of the end user B on end user terminal 300, the avatar B has exhibited a product MC on a marketplace MP operated in the metaverse by a service provision system 510. The products MC were, for example, owned by the avatar B in the metaverse.

The end user A operated end user terminal 300 to admit the avatar A to the marketplace MP. The end user A decided to allow the avatar A to purchase the product MC exhibited by the avatar B from among the products exhibited in the marketplace MP.

In this case, the end user A operates end user terminal 300 to cause the avatar A to act to purchase the product MC in the metaverse.

In response to the transaction in which the avatar A purchases the commodity MC in the marketplace MP, the ownership of the commodity MC in the metaverse is transferred to the avatar A. In addition, the wallet management system 800 causes the payment corresponding to the commodity MC to be withdrawn from the avatar A's wallet A in response to this transaction, and deposits the payment corresponding to the sale of the commodity MC in the avatar B's wallet B. In this case, the amount to be credited to the wallet B may be calculated after deducting, for example, marketplace MP fees.

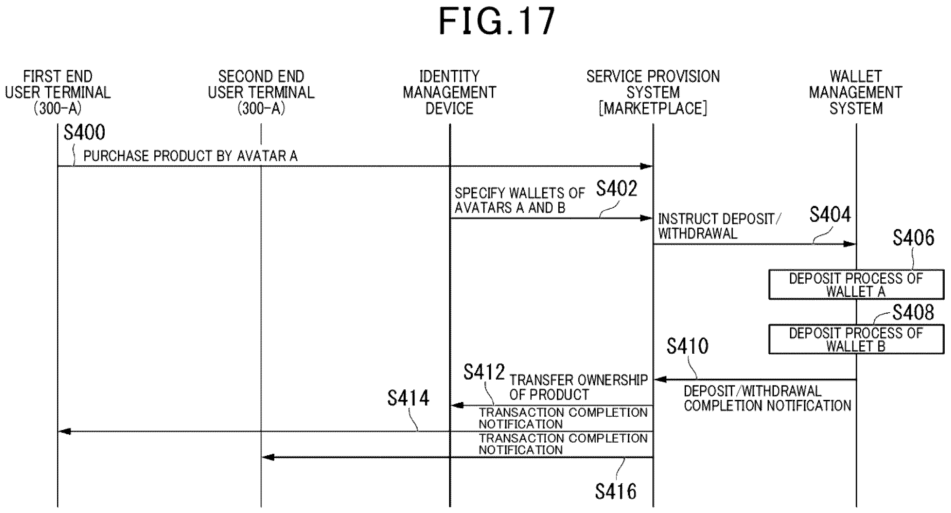

The sequence diagram in Fig. 17 shows an example of the processing procedure performed by the identity management system in response to the transaction between the avatar A and the avatar B shown in Fig. 16. The processing in the same figure is performed under the situation where the avatar A exists in the metaverse where the marketplace MP is established.

Step S400: The end user A operates end user terminal 300-A to cause the avatar A to take action to purchase avatar B's products in the marketplace MP of the metaverse.

Step S402: In the service provision system 510, the transaction control unit 511 accesses avatar information stored by the avatar information storage unit 432 of the identity management unit 400 in response to the avatar A purchasing the avatar B's product A. From the accessed avatar information, the transaction control unit 511 refers to the respective wallet holding information of the avatar A as the buyer and the avatar B as the seller of the product MC, and identifies the wallets held by each of the avatar A and the avatar B.

Step S404: The transaction control unit 511 provides instructions for deposits and withdrawals (deposit and withdrawal instructions) to the wallet management system 800 for the wallet identified in step S402. In the deposit/withdrawal instruction, the transaction control unit 511 transmits information indicating the transaction details to the wallet management system 800.

Step S406: The wallet management system 800 executes a process (withdrawal process) to ensure that withdrawals are made for the wallet A in accordance with the withdrawal and deposit instructions according to step S404 for the price of the product A.

Step S408: Additionally, the wallet management system 800 performs a process (deposit process) to ensure that a deposit is made in respect of the wallet B for the price of the product A.

Step S410: After processing steps S406 and S408, the wallet management system 800 transmits a deposit and withdrawal completion notification to the service provision system 510 indicating that the deposit and withdrawal in accordance with the deposit and withdrawal instructions have been completed.

Step S412: The transaction control unit 511 recognizes that the transfer of consideration for the product MC between the avatar A and the avatar B in the current transaction is complete upon receipt of the deposit and withdrawal completion notification. Therefore, the transaction control unit 511 transfers the ownership of the products MC from the avatar B to the avatar A.

Step S414: The transaction control unit 511 transmits a transaction completion notification to the end user terminal 300-A of the end user A corresponding to the avatar A.

Step S416: The transaction control unit 511 also transmits a transaction completion notification to the end user terminal 300-B of the end user B corresponding to the avatar B.

The end user terminal 300-A that receives the transaction completion notification reports that the purchase of the product A by the avatar A has been completed in response to the receipt of the transaction completion notification. Such a notification may be made in the metaverse in which the marketplace MP is established, for example, by displaying a view of the avatar A holding the product A.

The end user terminal 300-B that receives the transaction completion notification also reports that the purchase of the product B has been completed in response to the receipt of the transaction completion notification. Such a notification may be made in the metaverse in which the marketplace MP is established, for example, by displaying the disappearance of the product A from the assets, etc. held by the avatar B.

The asset storage status in the wallet held by the avatar may be made available for viewing at the end user terminal 300 of the end user corresponding to the avatar. In this case, the end user terminal 300 may access the wallet management system 800 in response to an operation of the end user, and refer to the asset storage status in the wallet of the avatar corresponding to the end user. For example, the wallet management system 800 may be capable of centrally managing a plurality of wallets held by each of a plurality of avatars corresponding to one user. In this case, if the user's own assets are taken as distributed across the wallets of the plurality of avatars, the user's own assets can be managed by centrally managing the plurality of wallets.

In the present embodiment, the wallet is enabled to store assets under the cryptocurrency use environment and may also store information about the corresponding avatar, e.g., identity-related information (Figs. 9 and 20).

In the case where identity-related information contains information on a given qualification, the corresponding avatar may be treated as a certifying entity for that qualification. As a concrete example, if information on employee credentials is stored as identity-related information in the wallet associated with the employee's avatar, the employee's avatar itself can be treated as an employee certificate.

In the case where a plurality of end users are allowed to share one avatar under the identity management system of the present embodiment, in response to the first end user setting the authorization to use the avatar to another second end user, the second end user may also be able to hold it. Alternatively, the authority to manage the wallet may be transferred from the first end user to the second end user in response to the first end user setting or transferring the authority to use the avatar to another second end user.

The avatars thus shared or transferred between a plurality of end users may be real characters, AI-generated fictional persons or characters, company-owned avatars, etc.

For example, if an avatar of the president owned by a company exists in the metaverse, a number of employees belonging to the company are authorized to use the president's avatar. The history of each of the plurality of employees operating and acting on the president's avatar is stored in the avatar information storage 432 as action history information.

The action history information stored as described above is an achievement of the employee having operated the avatar of the president with the authority to use the avatar. In the present embodiment, on the basis that the action history information indicates the above-described achievements, the action history information itself may function as identification information that verifies the identity of the avatar as the president. In this case, as a mode of issuing identification information, the VC issuance system 600 may be configured to treat the behavioral history information as identification information. As a specific example, the VC issuance system 600 may add information to the behavioral history information as a label indicating that the information functions as identification information of being the president. Alternatively, the VC issuance system 600 may be configured to respond to a request for identification about the president's avatar, based on the behavioral history information to verify that it is the identity of the president.

Here, a program that implements functions as the avatar generation system 100, the end user terminal 300, the identity management device 400, the service provision system 510, the VC issuance system 600, the DPKI system 700, the wallet management system 800, etc. described above maybe stored on a computer-readable storage. Thus, by causing a computer system to read and execute the program stored on the computer-readable storage medium, the avatar generation system 100, the end user terminal 300, the identity management device 400, the service provision system 510, the VC issuance system 600, the DPKI system, and the wallet management system 800, etc., may be implemented. The term "causing a computer system to read and execute a program stored on a storage medium" includes installing the program on the computer system. The term "computer system" here may include hardware such as an operating system and peripheral equipment. A "computer system" may also include a plurality of computer devices connected via a network including communication lines such as the Internet, WAN, LAN and leased lines. The term "computer-readable storage medium" refers to a portable medium such as a flexible disc, an optical-magnetic disc, a ROM, a CD-ROM, or a storage device such as a hard disc built in a computer system. Thus, the storage medium storing the program may be a non-transitory storage medium such as a CD-ROM. A storage medium also includes an internal or external storage medium that is accessible by the delivery server for delivering the relevant program. The code of the program stored on the recording medium of the delivery server may be different from the code of the program in a form executable by the terminal device. In other words, as long as the program can be downloaded from the distribution server and installed in an executable manner on the terminal device, the format in which it is stored on the distribution server is not required. It is also possible to have a configuration in which the program is divided into a plurality of parts, each of which is downloaded at different times and then merged at the terminal equipment, or to have different delivery servers that deliver each of the divided programs. Furthermore, the term "computer-readable storage medium" may also include a volatile memory (RAM) inside a computer system that serves as a server or a client when a program is transmitted via a network, which holds the program for a certain time. The above-described program may also be used to implement some of the above-described functions. Furthermore, it may be a so-called difference file (difference program), which can implement the above-described functions in combination with a program already stored in the computer system.

### <Supplemental notes>

(1) One aspect of the present embodiment provides an avatar management system that includes an avatar identification information management unit that performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.
(2) One aspect of the present embodiment provides the avatar management system according to supplemental note (1), in which the avatar identification information management unit generates signed identification information with a digital signature with respect to identification information of an avatar using a private key associated with an avatar authentication identifier of the avatar, and transmits the signed identification information of a target avatar to a verifier who performs identification regarding the avatar by decrypting the signed identification information using a public key corresponding to the private key.
(3) One aspect of the present embodiment provides the avatar management system according to supplemental note (1) or (2), in which the identification information issuance system is provided with a public identification information issuance system that issues public identification information of a public issuer.
(4) One aspect of the present embodiment provides the avatar management system according to supplemental note (1) or (2), in which the identification information issuance system is provided with a private identification information issuance system that issues private identification information associated with a private issuer.
(5) One aspect of the present embodiment provides the avatar management system according to any one of supplemental notes (1) to (4) that may further include: a credibility setting unit that is capable of setting a credit level indicating a degree of credibility of proving identification from the identification information.
(6) One aspect of the present embodiment provides the avatar management system according to any one of supplemental notes (1) to (5) that may further include: a credit management unit that evaluates, based on credit information indicating credibility of an issuer that causes the identification information issuance system to issue identification information, the credibility of the issuer.
(7) One aspect of the present embodiment provides the avatar management system according to any one of supplemental notes (1) to (6) that may further include: a use authorization setting unit that is capable of setting use authorization that uses the avatar that exists in a metaverse, to an end user other than a primary authorized user.
(8) One aspect of the present embodiment provides the avatar management system according to any one of supplemental notes (1) to (7) that may further include: a wallet addition unit that associates an avatar with a wallet available for transaction in a metaverse; and a transaction control unit that controls transaction between avatars using each of a plurality of wallets that are associated with each of a plurality of avatars.
(9) One aspect of the present embodiment provides the avatar management system according to any one of supplemental notes (1) to (8) that may further include: an authenticity information addition unit that adds authenticity certification information to an avatar that is registered; and an authenticity confirmation unit that confirms, in response to a query of authenticity confirmation being performed by designating an avatar used in the network service, authenticity of the designated avatar.
(10) One aspect of the present embodiment provides an avatar management method in an avatar management system that includes: a step in which an avatar identification information management unit performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.
(11) One aspect of the present embodiment provides a program that causes a computer in an avatar management system to function as an avatar identification information management unit that performs management by: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

The above-described embodiment may be presented as follows.

A non-transitory computer-readable storage medium storing therein a program for causing a computer to implement: causing an identification information issuance system to issue identification information which is associated with an avatar authentication identifier issued so as to be unique for each avatar registered so as to be usable in a network service provided to an end user on a network and which verifies identity as the avatar; and storing the issued identification information in a storage unit.

### [Industrial Applicability]

According to the present invention, it is possible to promote the use of avatars that exist in the virtual space.

### [Reference Signs List]

100: avatar generation system, 110: avatar material provision system, 120: integration system, 200: user interface environment, 300: end user terminal, 300-1: first end user terminal, 300-2: second end user terminal, 400: identity management device, 401: communication unit, 402: control unit, 403: storage unit, 421: avatar registration unit, 422: authenticity information management unit, 423: avatar provision control unit, 424: VC management unit, 431: end user information storage unit, 432: avatar information storage unit, 433: avatar VC storage unit, 434: user VC storage unit, 435: credit information storage unit, 500: network service environment, 510: service provision system, 511: transaction control unit, 600: VC issuance system, 610: public VC issuance system, 620: private VC issuance system, 700: DPKI system, 800: wallet management system, 4001: communication device, 4002: ROM, 4003: RAM, 4004: storage, 4005: CPU.

## Claims

1. An avatar management system comprises:
an avatar identification information management unit that performs management by:
causing an identification information issuance system to issue identification information which is associated with an avatar authentication identifier issued so as to be unique for each avatar registered so as to be usable in a network service provided to an end user on a network and which verifies identity as the avatar; and
storing the issued identification information in a storage unit.

2. The avatar management system according to claim 1, wherein:
the avatar identification information management unit
generates signed identification information with a digital signature with respect to identification information of an avatar using a private key associated with an avatar authentication identifier of the avatar, and
transmits the signed identification information of a target avatar to a verifier who performs identification regarding the avatar by decrypting the signed identification information using a public key corresponding to the private key.

3. The avatar management system according to claim 1 or 2, wherein:
the identification information issuance system is provided with a public identification information issuance system that issues public identification information of a public issuer.

4. The avatar management system according to claim 1 or 2, wherein:
the identification information issuance system is provided with a private identification information issuance system that issues private identification information associated with a private issuer.

5. The avatar management system according to claim 1 or 2, wherein:
a credibility setting unit that is capable of setting a credit level indicating a degree of credibility of proving identification from the identification information.

6. The avatar management system according to claim 1 or 2, further comprising:
a credit management unit that evaluates, based on credit information indicating credibility of an issuer that causes the identification information issuance system to issue identification information, the credibility of the issuer.

7. The avatar management system according to claim 1 or 2, further comprising:
a use authorization setting unit that is capable of setting use authorization that uses the avatar that exists in a metaverse, to an end user other than a primary authorized user.

8. The avatar management system according to claim 1 or 2, further comprising:
a wallet addition unit that associates an avatar with a wallet available for transaction in a metaverse; and
a transaction control unit that controls transaction between avatars using each of a plurality of wallets that are associated with each of a plurality of avatars.

9. The avatar management system according to claim 1 or 2, further comprising:
an authenticity information addition unit that adds authenticity certification information to an avatar that is registered; and
an authenticity confirmation unit that confirms, in response to a query of authenticity confirmation being performed by designating an avatar used in the network service, authenticity of the designated avatar.

10. An avatar management method in an avatar management system, the avatar management method comprising:
a step in which an avatar identification information management unit performs management by:
causing an identification information issuance system to issue identification information which is associated with an avatar authentication identifier issued so as to be unique for each avatar registered so as to be usable in a network service provided to an end user on a network and which verifies identity as the avatar; and
storing the issued identification information in a storage unit.

11. A program for causing a computer in an avatar management system to function as an avatar identification information management unit that performs management by:
causing an identification information issuance system to issue identification information which is associated with an avatar authentication identifier issued so as to be unique for each avatar registered so as to be usable in a network service provided to an end user on a network and which verifies identity as the avatar; and
storing the issued identification information in a storage unit.
